# EUROPEAN PATENT APPLICATION

(11) **EP 4 744 911 A1**
(43) Date of publication of application: **20.05.2026**
(21) Application number: 24840158.0
(22) Date of filing: 10.07.2024
(51) Int. Cl.: B60C 19/00, B60C 9/00, B29D 30/08, B29D 30/00, B29D 30/06, B60C 9/18

(54) **NOISE-REDUCING PNEUMATIC TIRE AND METHOD OF MANUFACTURING SAME**

(30) Priority: 11.07.2023 KR 20230090113
(71) Applicant: HANKOOK TIRE & TECHNOLOGY CO., LTD, Gyeonggi-do 13494 (KR)
(72) Inventor: LEE, Kwang-Yong, Daejeon 34127 (KR); LEE, Ho Jong, Daejeon 34127 (KR); LEE, Sun Mi, Daejeon 34127 (KR)
(74) Representative: Zimmermann, Tankred Klaus
(86) International application number: PCT/KR2024/095901
(87) International publication number: WO 2025/014348

(57) **Abstract**

The present invention relates to a noise-reducing pneumatic tire and a method of manufacturing same and, more specifically, to improve sound absorption performance and stable installation. In order to achieve the purpose described above, the present invention provides a noise-reducing pneumatic tire comprising: an inner liner of the pneumatic tire; and a sound-absorbing structure attached to the inner liner, wherein the sound-absorbing structure includes: a sound-absorbing body provided to be attached to the inner surface of the inner liner along the circumferential direction of the pneumatic tire; and a through-hole formed through the sound-absorbing body and provided to allow a sensor to be positioned therein.

## Description

### [TECHNICAL FIELD]

The present invention relates to a noise-reducing pneumatic tire and a method for manufacturing the same, and more specifically relates to a noise-reducing pneumatic tire with improved sound absorption performance and stable mountability, and a method for manufacturing the same.

### [BACKGROUND ART]

A vehicle equipped with pneumatic tires inevitably generates noise during driving due to deformation of the tires as they contact the road surface. To reduce such noise, vehicle and tire manufacturers have continuously attempted to mount porous structures such as polyurethane foam inside the tire or the wheel to absorb noise.

However, when such noise-reducing structures are mounted on the tire, the weight of each tire increases by several hundred grams, and heat generated at the adhesion interface with the inner liner accumulates, causing the temperature to rise even further. As a result, during high-speed driving, the risk of tire damage due to heat increases, thereby threatening passenger safety. This issue can occur with tire-mounted noise reduction structures. Furthermore, as described in Korean Patent Publication No. 10-2021-0099124, when a noise-reducing structure is mounted in a spaced-apart manner from a tire equipped with a sensor container, the adhesive strength at the ends may be weak, causing the structure to detach.

In addition, such heat accumulation may generate voids within the adhesive layer used to mount the sensor containers, making accurate sensing difficult. Relevant prior documents are reviewed below. The reference numerals below are unrelated to the present invention.

Korean Patent No. 10-1775797, titled "A tire silent foam fixing structure comprising a silent foam fixing band and a tire having thereof," discloses a structure for attaching a sound-absorbing material to a tire. More specifically, it pertains to a noise-reducing material made of an expandable material to reduce noise generated inside the tire, which is made of an elastic material, and a pressure section that the inner surface of the tire, and the sound-absorbing material roll to the inner liner of the tire. The pressure unit, when stretched and then contacted, applies downward force to the top sound-absorbing material. Since no separated mounted is applied, it simplifies the sound-absorbing material attachment process and provides a tire bead sealing structure technology that offers the advantage of securely attaching and fixing the bead sealing material to the inner surface of the tire without damaging the tire. However, technology had the problem of generating residual vibrations during curing and excessive heat at the contact surface with the inner liner.

Korean Patent Publication No. 10-2021-0022383, titled "TIRE COMPRISING SEALANT LAYER AND ACOUSTIC ABSORBENT LAYER" discloses a tire including a sealant layer and a sound-absorbing material layer. However, mounting the sound-absorbing material layer is not easy, and excessive heat is generated where it contacts the inner liner.

### Prior Art Documents

Korean Patent Publication No. 10-2021-0099124, "MANUFACTURING METHOD OF TIRE HAVING SENSOR CONTAINER AND TIRE MANUFACTURED BY SAME" the date of published 2023-02-07
Korean Patent 10-1775797 "A tire silent foam fixing structure comprising a silent foam fixing band and a tire having thereof" the date of registered 2017-08-31
Korean Patent Publication No. 10-2021-0022383 "TIRE COMPRISING SEALANT LAYER AND ACOUSTIC ABSORBENT LAYER" the date of published 2021-03-03
Japanese Patent No. 06838629 "Pneumatic tire" the date of registered 2021-02-16

### [DETAILED DESCRIPTION OF THE INVENTION]

### [TECHNICAL PROBLEM]

The purpose of the present invention is to provide a noise-reducing pneumatic tire having improved sound-absorbing performance and stable mountability, and a method for manufacturing the same.

The technical problems addressed by the present invention are not limited to those described above and further include other problems that may be understood by a person skilled in the art from the descriptions of this specification.

### [SOLUTION TO PROBLEM]

A noise-reducing pneumatic tire according to the present invention includes:
an inner liner of a pneumatic tire, and a sound-absorbing structure mounted to the inner liner,
wherein the sound-absorbing structure comprising:
   a sound-absorbing body mounted on an inner surface of the inner liner along a circumferential direction of the pneumatic tire; and
   a through-hole formed in the sound-absorbing body to allow a sensor to be positioned therein.

According to an embodiment of the present invention, the sound-absorbing body may be made of a porous material and may have a thickness of 5 to 50 mm.

According to an embodiment of the present invention, the through-hole may have a diameter with 20 to 400% of a thickness of the sound-absorbing body.

According to an embodiment of the present invention, a center of the through-hole may coincide with a widthwise centerline of the sound-absorbing body.

According to an embodiment of the present invention, a center of the through-hole may be offset from the widthwise centerline of the sound-absorbing body by 1 to 30% of a width of the sound-absorbing body.

According to an embodiment of the present invention, the through-hole may have an upper-side diameter that is same as a lower-side diameter or 1 to 30% larger than a lower-side(diameter at a side facing the inner liner.

According to an embodiment of the present invention, the sound-absorbing structure further comprises one or more additional through-holes formed in regions of the sound-absorbing body other than where the sensor is located.

According to an embodiment of the present invention, the additional through-holes may be arranged at regular intervals along to a longitudinal direction of the sound-absorbing body.

According to an embodiment of the present invention, the additional through-holes may be arranged at regular intervals along to the width direction of the sound-absorbing body.

According to an embodiment of the present invention, the sound-absorbing structure may be formed as a continuous ring and mounted to the inner liner surface of the inner liner along an entire circumference of the inner liner, and may have a plurality of through-holes corresponding to multiple sensor-mounting positions formed on the inner liner.

### [ADVANTAGEOUS EFFECTS OF INVENTION]

According to the above features of the present invention, in a sensor container for mounting a sensor, the container part for inserting the sensor can be integrally formed with the inner liner on the inner side of the tire without adhesive. This prevents the occurrence of curvature on the contact surface, enabling the sensor to perform accurate sensing during tire operation. Simultaneously, the sound-absorbing structure with through-holes is attached seamlessly to the inner liner and this reduces noise caused by tire deformation when the tire contacts the ground during driving, thereby improving driving comfort. Furthermore, compared to tires with conventional sound-absorbing structures attached, the overall weight is reduced and rolling resistance is decreased. Consequently, an improvement in the vehicle's fuel efficiency can be expected.

According to the present invention, the accumulation of heat generated at the interface where the sound-absorbing structure is attached to the tire's inner liner during high-speed driving is reduced due to the additional through-hole. The heat dissipation allows the tire temperature to decrease. As a result, the safety of sensors and attachment surfaces mounted inside the tire is enhanced, the risk of tire failure is reduced, durability is improved, and consequently, the safety of occupants can be expected to increase.

The effects of the present invention are not limited to the above effects, and should be understood to include all effects inferable from the detailed description of the invention or the configuration of the invention described in the claims.

### [BRIEF DESCRIPTION OF THE DRAWINGS]

Fig. 1 shows a photograph of a pneumatic tire with a sound-absorbing material according to JP 06838629.
Fig. 2 shows a perspective view of the sensor container structure.
Fig. 3 shows a perspective view of the noise-reducing structure of the pneumatic tire of the present invention.
Fig. 4 shows a sectional view illustrating the noise reduction pneumatic tire of the sound-absorbing structure mounted.
Fig. 5 shows a sectional view of the tire along the circumferential direction.
Fig. 6 shows the container part of the present invention mounted on the inner liner.
Fig. 7 shows an embodiment in which the through-hole of the sound-absorbing structure is positioned corresponding to the container part.
Fig. 8 shows a photograph showing an embodiment of additional through-holes formed in the sound-absorbing structure.
Fig. 9 shows a graph showing results of a high-speed endurance test performed on the noise-reducing pneumatic tire of the present invention.
Fig. 10 shows a flowchart showing a method for manufacturing the pneumatic tire of the present invention.
Fig. 11 shows a perspective view of a dummy adapted to the present invention.

### [BEST MODE]

In a preferred embodiment, the noise-reducing pneumatic tire includes an inner liner of the tire and a sound-absorbing structure mounted on the inner liner,
wherein the sound-absorbing structure comprising:
a sound-absorbing body mounted on an inner surface of the inner liner along a circumferential direction of the pneumatic tire, and
a through-hole formed in the sound-absorbing body to allow a sensor to be positioned therein.

### [DESCRIPTION OF EMBODIMENTS]

Hereinafter, the present invention is described with reference to the accompanying drawings. However, the present invention may be modified in various different ways and is not limited to the embodiments described herein. Further, in the accompanying drawings, components irrelevant to the description will be omitted in order to clearly describe the present invention, and similar reference numerals will be used to describe similar components throughout the specification.

Throughout the specification, when an element is referred to as being "connected with(coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

Terms used in the present invention are used only in order to describe specific exemplary examples rather than limiting the present invention. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

Terms '~er', '~unit', '~module', etc. used herein mean the units for processing at least one function or operation and may be implemented by hardware, software, or a combination of hardware and software.

Further, in the specification, when a step is positioned "before" or "after" another step, this includes the same right as not only when the step and another step are in a direct time-serial relationship, but when they are in an indirect time-serial relationship in which the orders of the two steps may be time-serially changed such as mixing of the steps after the steps.

Hereinafter, examples of the present invention are described in detail with reference to the accompanying drawings.

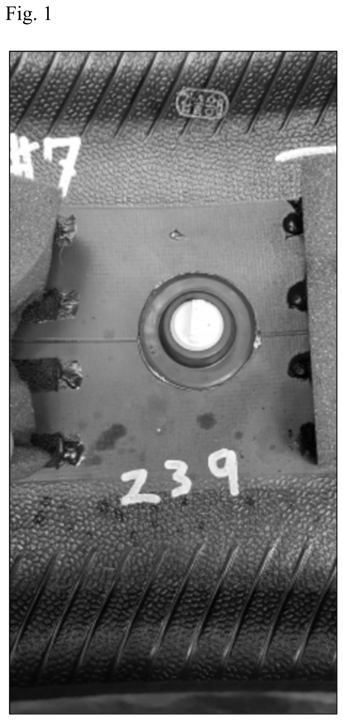

Fig. 1 shows a photograph of a pneumatic tire with a sound-absorbing material according to JP 06838629. When the sound-absorbing structure is mounted spaced apart from a tire having a sensor container, the end adhesion strength is weak, causing the detachment.

In conventional tires, because a sound-absorbing structure cannot be installed in the region where the sensor is attached, noise tends to increase in that part.

Further, when the sound-absorbing structure is installed continuously, sensor installation becomes difficult, and heat generation increases. This heat can cause voids in the adhesive layer between sensor containers by measuring to check the sensing.

The present invention was invented to solve the above problems, and its configuration is described below.

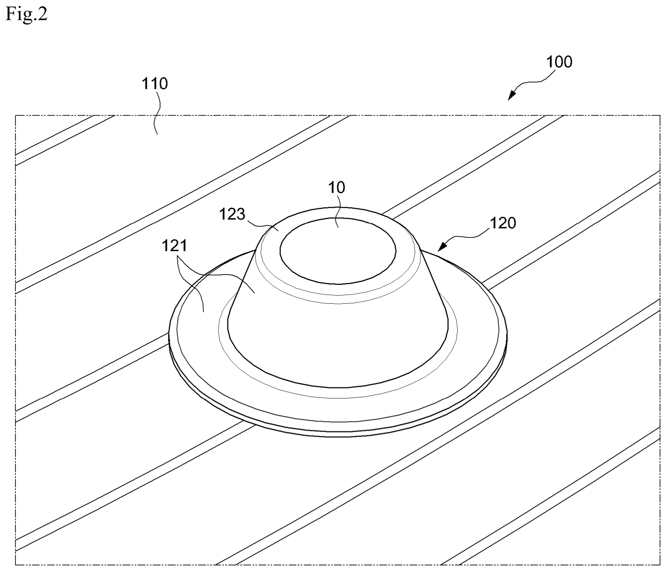

Fig. 2 shows a perspective view of the sensor container structure. The tire(100) includes an inner liner(110) to which a sensor container part(120) is mounted. The sensor container part(120) is vulcanization-bonded to the tire(100) and includes container sidewalls(121), a container cover(123), and a sensor insertion hole(10).

The container sidewalls(121) are configured such that their lower portion is integrated with the tire(110) during vulcanization. Specifically, they include a bottom surface vulcanized to the tire and sidewalls extending upward from the bottom.

The container sidewalls(121) become securely fixed by being vulcanization-bonded to the inner liner(110) of the tire(100).

The container cover(123) extends from the upper ends of the container sidewalls(121) and covers the upper portion. The sensor insertion hole(10) is formed in the center of the container cover(123), providing a space for inserting the sensor after vulcanization.

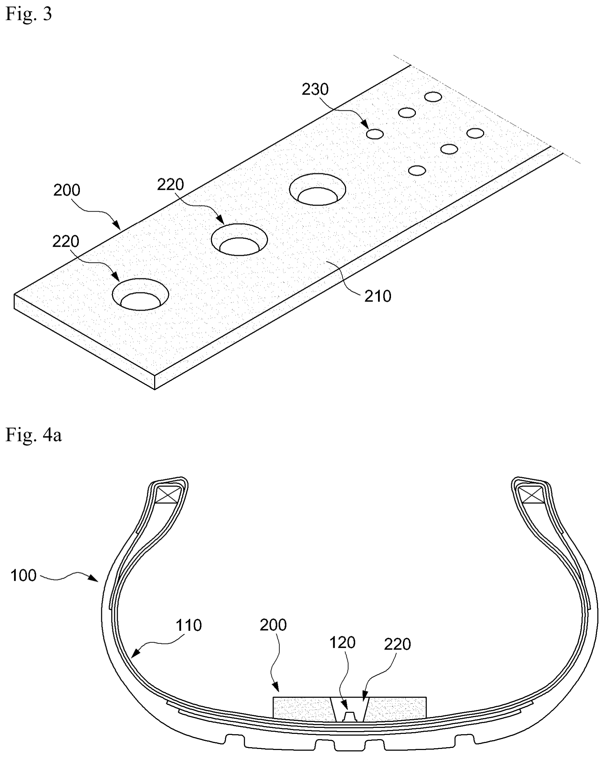

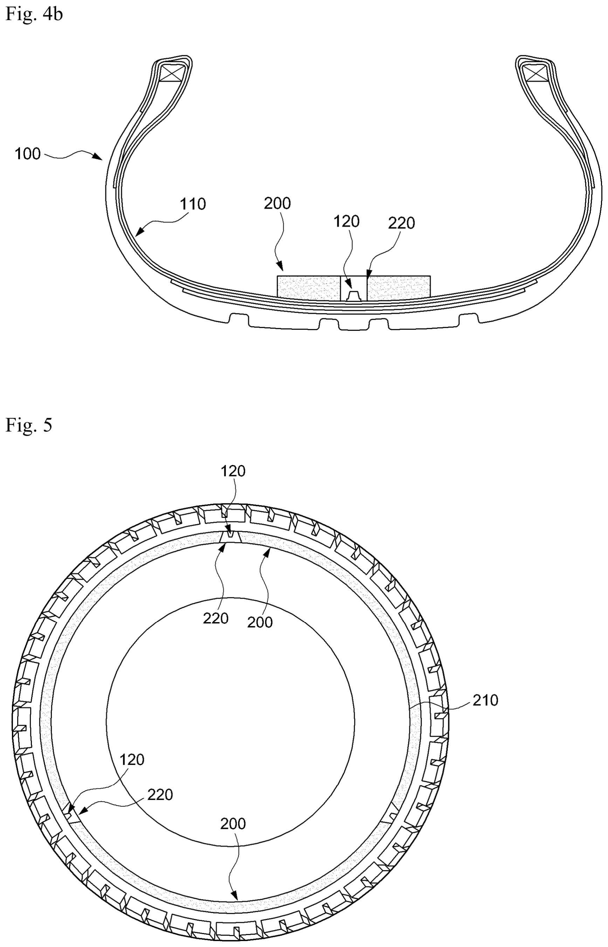

Fig. 3 shows a perspective view of the noise-reducing structure of the pneumatic tire of the present invention. Fig. 4 shows a sectional view illustrating the noise reducing pneumatic tire of the sound-absorbing structure mounted. Fig. 5 shows a sectional view of the tire along the circumferential direction, illustrating the state where the sound-absorbing structure of the noise-reducing pneumatic tire of the present invention is attached.

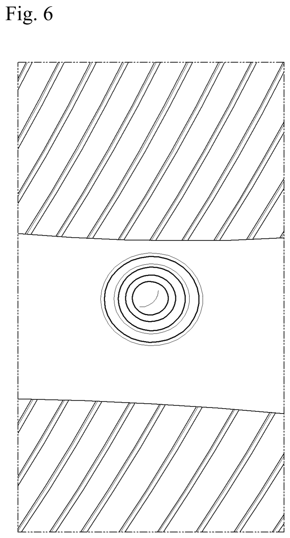

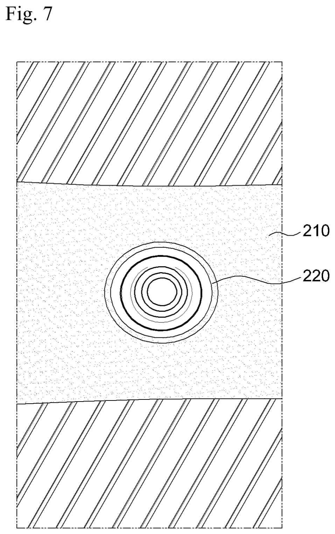

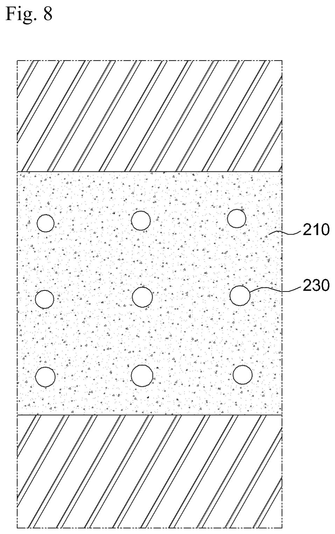

Fig. 6 shows the container part(120) mounted on the inner liner(110), Fig. 7 shows an embodiment in which the through-hole of the sound-absorbing structure is positioned corresponding to the container part, and Fig. 8 shows a photograph showing an embodiment of additional through-holes formed in the sound-absorbing structure.

As shown in Fig. 3 to 8, the sound-absorbing structure(200) includes a sound-absorbing body(210), a through-hole(220), and additional through-holes(230).

The sound-absorbing body(210) extends along the circumferential direction of the tire and is mounted on the inner surface of the inner liner(110). In this case, the sound-absorbing body(210) may be formed to have the thickness may be 5 to 50 mm.

The sound-absorbing body(210) is formed of a porous sound-absorbing material, which is lightweight and exhibits superior heat-dissipation performance.

Except for the region where the through-hole(220) and additional through-holes(230) are formed, the sound-absorbing body(210) covers the entire inner liner(110), providing excellent noise-reducing performance.

The through-hole(220) is formed through the sound-absorbing body(210) to provide a space for a sensor.

In the embodiment, the container part(120) is circular, so the through-hole(220) is drawn circular. However, the through-hole may be elliptical, polygonal, rectangular, or any shape matching the container part.

Furthermore, when the through-hole(220) is formed of elliptical, depending on the shape and movement of the container part(120), the major axis direction of the elliptical through-hole(220) can be positioned in various directions such as widthwise, circumferential, or diagonal direction of the tire.

The through-hole(220) may have a diameter 20 to 400% of the sound-absorbing body thickness. A diameter larger than the container part helps avoid interference during mounting.

The center of the through-hole(220) may coincide with the widthwise centerline of the sound-absorbing body.

However, depending on the position of the container part(120) and workability, the through-hole(220) may be offset, and does not need to align perfectly with the container center.

The through-hole(220) may be located 1 to 30% of the width away from the centerline.

As shown in Fig. 4A and 4B, the through-hole(220) may have equal diameters on top and bottom, or the upper diameter may be 1 to 30% larger than the lower diameter to avoid interference with the sensor or container.

The additional through-holes(230) may be formed in regions other than where the container part is located and may include one or multiple sizes. This enhances heat dissipation and contributes to additional noise reduction and weight reduction.

Multiple additional through-holes(230) may be arranged with regular intervals along the longitudinal direction of the sound-absorbing body(210). Additional through-holes(230) are continuously formed at the intervals between the through-hole(220). The diameter and number of additional through-holes(230) can be designed and formed variably according to the heat dissipation performance, noise-reducing performance, and other requirements demanded by each tire.

Multiple additional through-holes(230) may also be arranged with regular intervals along the width direction. Examples with two or three holes in Fig. 3 and 8 are illustrative; diameter and quantity are adjustable depending on performance requirements of a tire, such as heat dissipation performance or sound absorbing performance.

Meanwhile, the sound-absorbing structure(200) may be mounted as a continuous ring along the entire circumference of the inner liner(110). Multiple through-holes(220) may be formed corresponding to multiple sensor-mounting positions on the inner liner(110).

Fig. 5 illustrates an example where three sensors are installed on the inner liner(110). Correspondingly, three through-holes(220) may be formed in the continuous ring-shaped sound-absorbing structure(200).

This continuous ring or band-shaped structure and the multiple through-holes(220) enable complete coverage of the inner liner(110) without leaving any gaps, while ensuring that only the regions where sensors are located include through-holes, thus avoiding interference. This configuration maximizes noise-reducing performance and enhances heat-dissipation performance.

Therefore, the present invention minimizes interference with the container part(120) while providing efficient noise-reducing performance.

### Examples

### (1) Setting of Embodiments and Comparative Examples

For high-speed endurance evaluation, the structure without a sound-absorbing material was used as Comparative Example, a general sound-absorbing material without through-holes(220) or additional through-holes(230) was used as Example 1, and the sound-absorbing structure(200) of the present invention was used as Example 2.

### (2) For High-Speed Endurance Results

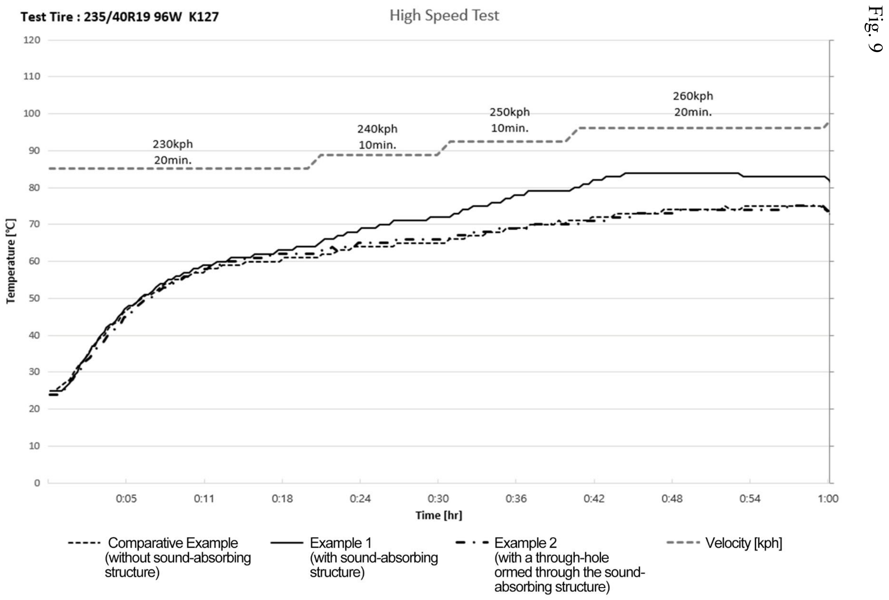

Fig. 9 shows the high-speed endurance test results of the present invention.

After installing a sensor-equipped container and sound-absorbing structure into a 235/40R19 96W tire, high-speed testing showed that Example 2(structure of the invention) achieved heat accumulation levels comparable to those without any sound-absorbing material(Comparative Example), and significantly lower than Example 1. Moreover, noise-reducing performance was maintained even with the through-holes.

Thus, during high-speed driving, heat accumulation along the boundary surface between the sound-absorbing structure(200) and the inner liner(110) is reduced. This reduces internal tire temperature, improves sensor stability, adhesive stability, tire durability, and enhances passenger safety.

The method for manufacturing the noise-reducing pneumatic tire of the present invention is described below.

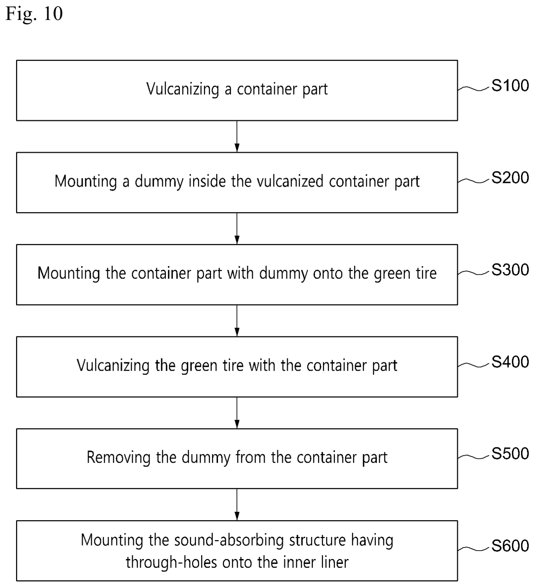

Fig. 10 shows a flowchart showing a method for manufacturing the noise-reducing pneumatic tire of the present invention.

The manufacturing method of the present invention includes:
vulcanizing the sensor container part(S100); mounting a dummy inside the vulcanized container part(S200); mounting the container part with dummy onto the green tire(S300); vulcanizing the green tire with the container part(S400);
removing the dummy from the container part(S500); mounting the sound-absorbing structure having through-holes onto the inner liner(S600), and the through-holes are located corresponding the container part. Subsequently, steps such as determining the necessity of sensor installation and inserting the sensor into the location where the dummy was removed may be performed.

Vulcanizing the sensor container part(S100) is comprising of the container part may be made of a polymer mixture including natural rubber or synthetic rubber and further including at least one of carbon, silica, and organic fillers.

Vulcanization Conditions should be controlled with temperature and time as below, because the vulcanization must not reach 100% cure such that chemical bonding with the green tire inner-liner rubber can still occur.
Temperature: 140-160°C(preferably 145-155°C)
Time: 100-500 seconds(preferably 110-300 seconds)

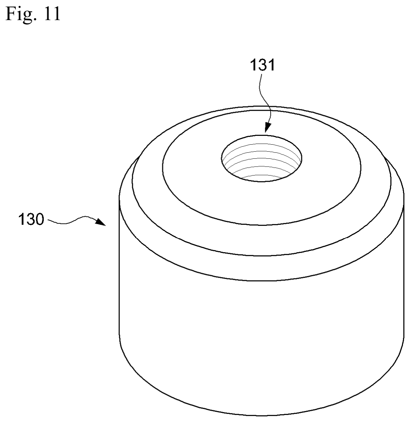

Fig. 11 shows a perspective view of a dummy adapted to the present invention. The dummy(130) preferably includes an internal screw-threaded hole(131) for easy withdrawal using a screw rod. The dummy(130) may be manufactured by machining or injection molding. Accordingly, the manufacturing method for the pile may more preferably employ machining or injection molding. Particularly in the case of injection molding, the shape may be completed by manufacturing two or more separation parts and then integrating them. In this case, methods such as bonding, heat fusion, and ultrasonic fusion are more preferable for the integration method.

In mounting the container part with dummy onto the green tire(S300), a pressing force of 0.01-10 kg/cm² is preferred when attaching the container part onto the green tire.

The attached container part remains affixed to the inner liner rubber of the green tire due to adhesive force, preventing detachment during the transport and maintains its mounted until the tire is cured.

If the pressing force is under 0.01 kg/cm², adhesion becomes poor and detachment may occur, and if the container part is detached, a danger may occur to break a transporting device or vulcanization device. If the pressing force is over 10 kg/cm² deformation of the green tire's shape may occur, so making the numerical limits significant.

The vulcanization of step(S400) may be performed under conditions identical to those used for general tires.

Removing the dummy from the container part(S500), conventional cast-type dummies cannot easily incorporate internal features, making removal difficult.

In the present invention, removing the dummy from the container part(S500), when the dummy is removed from the container part, the dummy has a hole with screw thread and the dummy could be easily withdrawned. Additionally, the removed dummy can be recycled later.

At step(S600) of attaching the sound-absorbing structure with the through holes to the tire's inner liner, the sound-absorbing structure(200) can be mounted to cover the tire's inner liner(110). The sound-absorbing structure(200) is arranged to cover the inner surface of the inner liner(110), thereby effectively reducing noise while allowing the through holes(220) and additional through holes(230) to dissipate heat, ensuring the attachment remains in mounting stability.

Additionally, as described earlier, the container part(120) may be formed to be simultaneously be attached using an adhesive instead of vulcanization bonding or may be adhesively bonded in an inner liner(110)

Although the present invention was described with reference to limited drawings, the above description is provided as an exemplary example of the present invention, and it should be understood that the present invention may be easily modified in other various ways without changing the spirit or the necessary features of the present invention by those skilled in the art. Therefore, the examples described above are only exemplary and should not be construed as being limitative in all respects. For example, the components described as single parts may be divided and the components described as separate parts may be integrated. Further, the techniques described above may be performed in a different order from the described method.

Although certain embodiments and implementations have been described herein, other embodiments and modifications will be apparent from this description. Accordingly, the inventive concepts are not limited to such embodiments, but rather to the broader scope of the appended claims and various obvious modifications and equivalent arrangements as would be apparent to a person of ordinary skill in the art.

### <Reference Signs>

10: Sensor insertion hole
100: Pneumatic tire
110: Inner liner
120: Container part
121: Container sidewall
123: Container cover
130: Dummy
131: Dummy hole
210: Sound-absorbing body
220: Through-hole
230: Additional through-hole

## Claims

1. A noise-reducing pneumatic tire includes:
an inner liner of a pneumatic tire; and
a sound-absorbing structure mounted to the inner liner;
wherein the sound-absorbing structure comprising:
a sound-absorbing body mounted on an inner surface of the inner liner along a circumferential direction of the pneumatic tire; and
a through-hole formed in the sound-absorbing body to allow a sensor to be positioned therein.

2. The noise-reducing pneumatic tire of claim 1,
wherein the sound-absorbing body is made of a porous material and has a thickness of 5 to 50 mm.

3. The noise-reducing pneumatic tire of claim 1,
wherein the through-hole has a diameter with 20% to 400% of a thickness of the sound-absorbing body.

4. The noise-reducing pneumatic tire of claim 1,
wherein a center of the through-hole coincides with a widthwise centerline of the sound-absorbing body.

5. The noise-reducing pneumatic tire of claim 1,
wherein a center of the through-hole is offset from the widthwise centerline of the sound-absorbing body by 1% to 30% of a width of the sound-absorbing body.

6. The noise-reducing pneumatic tire of claim 1,
wherein the through-hole has an upper-side diameter that is same as a lower-side diameter or 1% to 30% larger than a lower-side diameter at a side facing the inner liner.

7. The noise-reducing pneumatic tire of claim 1,
wherein the sound-absorbing structure further comprises one or more additional through-holes formed in regions of the sound-absorbing body other than where the sensor is located.

8. The noise-reducing pneumatic tire of claim 7,
wherein the additional through-holes are arranged at regular intervals along to a longitudinal direction of the sound-absorbing body.

9. The noise-reducing pneumatic tire of claim 7,
wherein the additional through-holes are arranged at regular intervals along to a width direction of the sound-absorbing body.

10. The noise-reducing pneumatic of claim 1,
wherein the sound-absorbing structure is formed as a continuous ring and mounted to the inner surface of the inner liner along an entire circumference of the inner liner.

11. The noise-reducing pneumatic of claim 1,
wherein the sound-absorbing structure has a plurality of through-holes corresponding to multiple sensor-mounting positions formed on the inner liner.
